# EUROPÄISCHE PATENTSCHRIFT

(11) **EP 0 640 109 B1**
(45) Veröffentlichungstag und Bekanntmachung des Hinweises auf die Patenterteilung: **20.12.1995**
(21) Anmeldenummer: 93909984.2
(22) Anmeldetag: 13.05.1993
(51) Int. Cl.: C08G 77/06, C08G 77/18

(54) **VERFAHREN ZUR HERSTELLUNG VON ORGANOPOLYSILOXANHARZ**
PROCESS FOR PRODUCING ORGANOPOLYSILOXANE RESIN
PROCEDE DE FABRICATION DE RESINE ORGANOPOLYSILOXANIQUE

(30) Priorität: 15.05.1992 DE 4216139
(43) Veröffentlichungstag der Anmeldung: 01.03.1995
(73) Patentinhaber: WACKER-CHEMIE GMBH, D-81737 München (DE)
(72) Erfinder: WEIDNER, Richard, Dr., D-84489 Burghausen (DE); MAUTNER, Konrad, Dr., D-84556 Kastl (DE); MÜLLER, Reinhardt, Dr., D-84489 Burghausen (DE)
(86) Internationale Anmeldenummer: EP9301201
(87) Internationale Veröffentlichungsnummer: WO9323455

(56) Entgegenhaltungen:
- EP-A- 0 089 279
- EP-A- 0 294 277
- EP-A- 0 535 687
- FR-A- 2 639 950
- US-A- 3 383 773
- US-A- 4 605 446

## Beschreibung

Die Erfindung betrifft ein Verfahren zur Herstellung von Organopolysiloxanharz durch Hydrolyse und Kondensation von Silanen und/oder deren (Teil-)Hydrolysaten sowie deren Verwendung.

Verfahren zur Herstellung von Organopolysiloxanharz sind bereits bekannt. Beispielsweise wird in EP 195 936 A (Toray Silicone Co., Ltd.; ausgegeben am 1. Oktober 1986) ein Verfahren zur Herstellung von sogenannten MQ-Harzen durch Hydrolyse von Alkylsilikat mit einem monofunktionellen Silan beschrieben, wobei das Reaktionsgemisch mindestens 5 Gewichtsprozent Hydrogenchlorid enthält und das Alkylsilikat als letzte Komponente langsam zugetropft wird. Des weiteren wird in EP 294277 A2 (Shin-Etsu Chemical Co., Ltd.; ausgegeben am 7. Dezember 1988) die Herstellung von MQ-Harzen mit einem hohen M:Q-Verhältnis durch saure Hydrolyse mit Schwefel enthaltenden Säuren beschrieben. In EP 345 534 A1 (Toray Silicone Co., Ltd.; ausgegeben am 13. Dezember 1989) werden chlormethylgruppenhaltige Organopolysiloxane beschrieben, die durch Hydrolyse und anschließender Kondensation hergestellt werden, wobei vor der Kondensation das bei der Hydrolyse erhaltene Organopolysiloxan durch Phasentrennung von den übrigen Komponenten abgetrennt wird. In US 4,605,446 (Kansai Paint Co., Ltd.; ausgegeben am 12. August 1986) wird ein verfahren zur Herstellung von hydroxygruppenfreien Siloxanharzen beschrieben, wobei Alkylsilikat und Trialkoxysilan in Anwesenheit von Wasser, einer Mineralsäure und eines in Wasser löslichen Lösungsmittels hydrolysiert und anschließend durch Zugabe einer Base kondensiert wird. Des weiteren wird in der deutschen Patentanmeldung mit dem Aktenzeichen DE-A-4 132 697 (Wacker-Chemie GmbH; angemeldet am 1. Oktober 1991) ein Verfahren zur Herstellung von Organopolysiloxanharz durch saure Hydrolyse von Silanen bzw. deren teilweiser Hydrolysate, basische Nachbehandlung und anschließender Fällung in Wasser beschrieben.

Es bestand die Aufgabe, ein Verfahren bereitzustellen, mit dem Organopolysiloxanharze auf einfache Weise, gut reproduzierbar und mit hohen Raum-Zeit-Ausbeuten hergestellt werden können.

Gegenstand der Erfindung ist ein Verfahren zur Herstellung von Organopolysiloxanharz, dadurch gekennzeichnet, daß
in einer 1. Stufe
mindestens ein Silan der Formel

R₃SiOR¹ (I)

und/oder dessen Hydrolysat R₃SiOSiR₃, wobei
- R: gleich oder verschieden sein kann und einen einwertigen organischen Rest bedeutet und
- R¹: einen Alkylrest bedeutet,
und mindestens ein Silan der Formel

Si(OR²)₄ (II)

und/oder dessen Teilhydrolysat, wobei
- R²: gleich oder verschieden sein kann und Alkylrest bedeutet,
sowie gegebenenfalls Organosiliciumverbindung, ausgewählt aus der Gruppe bestehend aus Silanen der Formel

R³ₐSi(OR⁴)₄₋ₐ (III)

und/oder deren Teilhydrolysate, wobei
- a: 1 oder 2 ist,
- R³: gleich oder verschieden sein kann und einen einwertigen organischen Rest bedeutet und
- R⁴: gleich oder verschieden sein kann und Alkylrest bedeutet, und
Organo(poly)siloxane der Formel

(R⁵₂SiO)_{b} (IV),

wobei
- R⁵: gleich oder verschieden sein kann und einen einwertigen organischen Rest bedeutet und
- b: eine ganze Zahl im Wert von 3 bis 8, vorzugsweise 4 oder 5, ist,
sowie deren Gemische,
mit Wasser in Gegenwart von Säure umgesetzt wird, wobei der entstandene Alkohol zumindest zum Teil abdestilliert wird,
in einer 2. Stufe
die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol destillativ entfernt werden,
in einer 3. Stufe
die in der 2. Stufe erhaltene homogene Reaktionsmasse mit Säure neutralisiert wird, gegebenenfalls noch vorhandenes Wasser und Alkohol abdestilliert wird und das aus der Neutralisation entstandene, ausgefallene Salz entfernt wird sowie
gegebenenfalls in einer 4. Stufe
die in der 3. Stufe erhaltene homogene Reaktionsmasse von wasserunlöslichem organischen Lösungsmittel befreit wird.

Bei den Resten R, R³ und R⁵ handelt es sich jeweils unabhängig voneinander vorzugsweise um einwertige Kohlenwasserstoffreste mit 1 bis 18 Kohlenstoffatom(en).

Beispiele für die Reste R, R³ und R⁵ sind jeweils unabhängig voneinander Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste als Rest R, R³ oder R⁵ sind jeweils unabhängig voneinander halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest; Aminoalkylreste, wie der 3-Aminopropyl-, N-(2-Aminoethyl)-3-aminopropyl- und N-(2-Aminoethyl)-3-amino-(2-methyl)-propylrest; Aminoarylreste, wie der Aminophenylrest; Hydroxyalkylreste, wie der Hydroxypropylrest und Reste der Formel 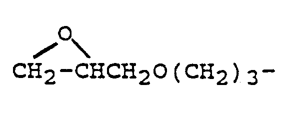
und

HOCH₂CH(OH)CH₂SCH₂CH₂-.

Bei den Resten R, R³ und R⁵ handelt es sich jeweils unabhängig voneinander besonders bevorzugt um den Methyl- und Vinylrest.

Beispiele für die Reste R¹, R² und R⁴ sind die für Rest R, R³ und R⁵ angegebenen Beispiele für Alkylreste.

Bei den Resten R¹, R² und R⁴ handelt es sich jeweils unabhängig voneinander bevorzugt um Alkylgruppen mit 1 bis 4 Kohlenstoffatom(en).

Bei den Resten R¹, R² und R⁴ handelt es sich jeweils unabhängig voneinander besonders bevorzugt um den Methyl- und Ethylrest.

Vorzugsweise werden bei dem erfindungsgemäßen Verfahren Silane der Formeln (I), (II) und gegebenenfalls (III) bzw. deren (Teil-)Hydrolysate eingesetzt, in denen R¹, R² sowie R⁴ die gleiche Bedeutung haben.

Falls bei dem erfindungsgemäßen Verfahren Teilhydrolysate von Silanen der allgemeinen Formel (II) und (III) eingesetzt werden, sind jeweils solche mit bis zu 15 Siliciumatomen bevorzugt.

Beispiele für die im erfindungsgemäßen Verfahren eingesetzten Silane der Formel (I) bzw. deren Hydrolysate, also Disiloxane, sind Trimethylethoxysilan, Vinyldimethylethoxysilan, Hexamethyldisiloxan, 1,3-Diphenyltetramethyldisiloxan, 1,3-Bis(allyl)tetramethyldisiloxan, 1,3-Divinyltetramethylsiloxan, wobei Hexamethyldisiloxan und 1,3-Divinyltetramethylsiloxan besonders bevorzugt sind.

Beispiele für die im erfindungsgemäßen Verfahren eingesetzten Silane der Formel (II) sind Tetramethoxysilan, Tetraethoxysilan und Tetra-n-propoxysilan, wobei Tetraethoxysilan und dessen Teilhydrolysat besonders bevorzugt ist.

Beispiele für die im erfindungsgemäßen Verfahren gegebenenfalls eingesetzten Silane der Formel (III) sind Methyltrimethoxysilan, Vinyltrimethoxysilan, 3-Mercaptopropyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, Vinyltriethoxysilan, 3-Mercaptopropyltriethoxysilan, 3-Chlorpropyltriethoxysilan, 3-Aminopropyltriethoxysilan, N-(2-Aminoethyl)-3-aminopropyltrimethoxysilan, N-(2-Aminoethyl)-3-aminopropyldimethoxymethylsilan, N-(2-Aminoethyl)-3-amino-(2-methyl)-propyldimethoxymethylsilan; Phenyltriethoxysilan, o,m,p-Tolyltriethoxysilan, Propyltrimethoxysilan, Dimethyldiethoxysilan und Dimethyldimethoxysilan, wobei Methyltrimethoxysilan, Methyltriethoxysilan, Phenyltriethoxysilan, o,m,p-Tolyltriethoxysilan und Propyltriethoxysilan bevorzugt eingesetzt werden.

Beispiele für die im erfindungsgemäßen Verfahren gegebenenfalls eingesetzten Organo(poly)siloxane der Formel (IV) sind Hexamethylcyclotrisiloxan, Octamethylcyclotetrasiloxan, Dekamethylcyclopentasiloxan, wobei Octamethylcyclotetrasiloxan und Dekamethylcyclopentasiloxan bevorzugt sind.

Falls Silan der Formel (III) bzw. dessen Teilhydrolysat und/oder Organo(poly)siloxan der Formel (IV) eingesetzt wird, werden diese in Mengen von vorzugsweise bis zu 15 Gewichtsprozent, bezogen auf das Gesamtgewicht der Siliciumverbindungen eingesetzt.

Der Einsatz von Silan der Formel (III) bzw. dessen Teilhydrolysat sowie Organo(poly)siloxan der Formel (IV) ist bei dem erfindungsgemäßen Verfahren nicht bevorzugt.

In der 1. Stufe des erfindungsgemäßen Verfahrens wird vorzugsweise ein Gemisch aus Silanen der Formel (I) und/oder dessen Hydrolysat, insbesondere solches mit R gleich Methyl- oder Vinylrest, und Silan der Formel (II) und/oder dessen Hydrolysat im Molverhältnis, bezogen auf Si-Einheiten, von bevorzugt 0,5:1 bis 1,5:1, besonders bevorzugt 0,6:1 bis 1:1, eingesetzt, wobei R¹ in Formel (I) die gleiche Bedeutung hat wie R² in Formel (II).

Bei dem erfindungsgemäßen Verfahren wird in der 1. Stufe zu einem Gemisch aus Silan der Formel (I) und/oder dessen Hydrolysat, Silan der Formel (II) und/oder dessen Teilhydrolysat sowie gegebenfalls Organosiliciumverbindung der Formel (III) und/oder dessen Teilhydrolysat oder (IV) Wasser und Säure gegeben und vermischt.

Bei der 1. Stufe des erfindungsgemäßen Verfahrens wird dabei Wasser in Mengen von vorzugsweise 5 bis 30 Gewichtsprozent, besonders bevorzugt 5 bis 20 Gewichtsprozent, insbesondere 8 bis 18 Gewichtsprozent, jeweils bezogen auf das Gesamtgewicht der Reaktionsmasse der 1. Stufe vor der Destillation, eingesetzt.

Bei den in der 1. Stufe des erfindungsgemäßen Verfahrens eingesetzten Säuren kann es sich um die gleichen Säuren handeln, die auch bisher zur Hydrolyse von Silanen mit Alkoxygruppen verwendet wurden. Beispiele für derartige Säuren sind anorganische Säuren, wie HCl, HClO₄, H₂SO₄ und H₃PO₄, organische Säuren, wie Essigsäure, Ameisensäure, Propionsäure, p-Toluolsulfonsäure, Methansulfonsäure, Trifluormethansulfonsäure, Dodecylbenzolsulfonsäure, wobei HCl, Dodecylbenzolsulfonsäure und p-Toluolsulfonsäure bevorzugt und HCl besonders bevorzugt eingesetzt werden.

Zur Erzielung einer homogenen Reaktionsmasse wird in der 1. Stufe des erfindungsgemäßen Verfahrens Säure vorzugsweise in Mengen von 0,2 bis 50 mmol, besonders bevorzugt 2,5 bis 15 mmol, jeweils bezogen auf 1000 g der Reaktionsmasse der 1. Stufe vor der Destillation, eingesetzt. Bei höheren Säurekonzentrationen wird im allgemeinen keine Homogenität der Reaktionsmasse erzielt. Beispielsweise hat sich bei der Verwendung der besonders bevorzugten HCl als Säure ein Konzentrationsbereich von 100 bis 500 ppm, bezogen auf das Gesamtgewicht der Reaktionsmasse der 1. Stufe vor der Destillation, als vorteilhaft herausgestellt. Falls einer oder mehrere der Reste R, R³ und R⁵ die Bedeutung von basischen Stickstoff aufweisendem, organischen Rest hat, muß noch zusätzlich die zur Neutralisation dieser Reste benötigte Säuremenge hinzugefügt werden.

Der bei der Hydrolyse in der 1. Stufe des erfindungsgemäßen Verfahrens entstehende Alkohol wird während oder nach, insbesondere nach, der Hydrolyse ganz oder teilweise entfernt. Je nach Art des Alkohols bzw. der Einsatzmenge an Wasser kann das Destillat gewisse Mengen Wasser enthalten. Vorzugsweise wird der Alkohol nach der Hydrolyse in dem Maße abdestilliert, daß die Reaktionsmasse homogen bleibt.

Besonders bevorzugt wird 50 bis 90 Gewichtsprozent Alkohol, bezogen auf das Gesamtgewicht an entstandenem Alkohol, destillativ entfernt.

Die 1. Stufe des erfindungsgemäßen Verfahrens wird vorzugsweise bei einer Temperatur von 20°C bis zur Siedetemperatur der Reaktionsmasse, besonders bevorzugt bei der Siedetemperatur der Reaktionsmasse, und einem Druck zwischen bevorzugt 900 und 1100 hPa durchgeführt.

Die 1. Stufe des erfindungsgemäßen Verfahrens ist nach vorzugsweise 30 Minuten bis 5 Stunden, besonders bevorzugt 1 bis 3 Stunden, abgeschlossen.

Nach Beendigung der 1. Stufe des erfindungsgemäßen Verfahrens wird Base in mindestens einer solchen Menge, die zur Erreichung einer basischen Reaktionsmasse notwendig ist, gegebenenfalls weitere Stoffe sowie wasserunlösliches organisches Lösungsmittel zugegeben. Es handelt sich dabei je nach eingesetzter Base im allgemeinen um Basenmengen im Bereich von 0,02 bis 2,0 Gewichtsprozent, bezogen auf das Gesamtgewicht der Reaktionsmasse der 2. Stufe vor der Destillation.

Vorzugsweise wird in der 2. Stufe soviel Base zugegeben, daß der pH-Wert im Bereich von 8,0 bis 14,0, bevorzugt von 9,0 bis 12,0, liegt.

Als Basen können in der 2. Stufe des erfindungsgemäßen Verfahrens alle Basen eingesetzt werden, die auch bisher als Katalysatoren bei Kondensationsreaktionen eingesetzt wurden.

Beispiele für solche Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, Ammoniumverbindungen, wie etwa Tetramethylammoniumhydroxid, Tetra-n-butylammoniumhydroxid und Benzyltrimethylammoniumhydroxid, wobei Natriumhydroxid, Kaliumhydroxid, Methylamin, Ethylamin, Diethylamin und Benzyltrimethylammoniumhydroxid bevorzugt und Natriumhydroxid, Kaliumhydroxid und Methylamin besonders bevorzugt sind.

Unter dem Begriff wasserunlösliche organische Lösungsmittel sollen im folgenden bei Raumtemperatur und dem Druck der umgebenden Atmosphäre mit Wasser höchstens in Mengen bis zu 1 g/l mischbare Lösungsmittel verstanden werden.

Beispiele für wasserunlösliche organische Lösungsmittel sind Kohlenwasserstoffe, wie Pentan, n-Hexan, cyclo-Hexan, Benzol, Toluol und o,m,p-Xylol, wobei Toluol und o,m,p-Xylol besonders bevorzugt sind.

Das in der 2. Stufe des erfindungsgemäßen Verfahrens eingesetzte wasserunlösliche organische Lösungsmittel wird mindestens in einer solchen Menge verwendet, die zur Erhaltung einer homogenen Reaktionsmasse ausreicht. Es handelt sich dabei bevorzugt um Mengen von bis zu 50 Gewichtsprozent, besonders bevorzugt bis zu 40 Gewichtsprozent wasserunlösliches organisches Lösungsmittel, jeweils bezogen auf das Gesamtgewicht der Reaktionsmasse der 2. Stufe vor der Destillation. Insbesondere werden soviel Volumenteile an wasserunlöslichem organischen Lösungsmittel zugegeben, wie Alkohol und gegebenenfalls Wasser in der 1. Stufe abdestilliert wurde.

Bei der in der 2. Stufe des erfindungsgemäßen Verfahrens durchgeführten Destillation werden das in der Reaktionsmischung enthaltene Wasser sowie der restliche Alkohol vollständig bzw. nahezu vollständig abdestilliert, wobei gegebenenfalls wasserunlösliches organisches Lösungsmittel mitabdestilliert wird.

Mit der in der 2. Stufe des erfindungsgemäßen Verfahrens durchgeführten Destillation wird vorteilhafterweise sofort nach der Basenzugabe begonnen. Die Destillation ist zur Erzielung eines von Alkoxy- und/oder Hydroxygruppen freien Organopolysiloxanharzes bzw. eines Organopolysiloxanharzes mit einem niedrigen Alkoxy- und/oder Hydroxygehalt notwendig.

Bei der Basenzugabe in der 2. Stufe zu der sauren Reaktionsmasse der 1. Stufe wird in geringen Mengen ein Salz gebildet, welches nach der Destillation in der 2. Stufe ausfallen kann. Im Rahmen der vorliegenden Erfindung soll jedoch das gegebenenfalls ausgefallene Salz im Hinblick auf den Begriff der homogenen Reaktionsmasse in der 2. Stufe unberücksichtigt bleiben.

Die 2. Stufe des erfindungsgemäßen Verfahrens wird bevorzugt bei der Siedetemperatur der Reaktionsmasse und einem Druck zwischen 900 und 1100 hPa durchgeführt.

Die 2. Stufe des erfindungsgemäßen Verfahrens ist nach vorzugsweise 0,5 bis 5 Stunden, besonders bevorzugt 1 bis 3 Stunden, abgeschlossen.

Nach Beendigung der 2. Stufe des erfindungsgemäßen Verfahrens wird die homogene Reaktionsmischung in einer 3. Stufe mit Säure neutralisiert, gegebenenfalls noch vorhandenes Wasser und Alkohol abdestilliert und das ausgefallene Salz entfernt.

Zur Neutralisation sind als Säure alle in der 1. Stufe genannten Säuren geeignet, wobei vorzugsweise die gleiche Säure wie in der 1. Stufe verwendet wird.

Falls zur Neutralisation in der 3. Stufe des erfindungsgemäßen Verfahrens mit Wasser verdünnte Säuren verwendet werden und/oder die Destillation in der 2. Stufe nicht vollständig war, muß in der 3. Stufe Wasser abdestilliert werden, wobei nach der Destillation das in der Reaktionsmasse vorhandene Salz vollständig ausfällt. Je nach Art des wasserunlöslichen organischen Lösungsmittels, insbesondere bei Toluol und Xylol, wird das Wasser im Gemisch mit diesem organischen Lösungsmittel abdestilliert.

Falls zur Neutralisation in der 3. Stufe des erfindungsgemäßen Verfahrens wasserfreie Säuren verwendet werden und die Destillation in der 2. Stufe in bezug auf Wasser vollständig war, kann auf die Destillation in der 3. Stufe verzichtet werden, wobei das bei der Neutralisation gebildete Salz sofort ausfällt.

Das ausgefallene Salz kann dann vorzugsweise durch Filtration von der Reaktionsmischung entfernt werden.

Nach Beendigung der 3. Stufe des erfindungsgemäßen Verfahrens wird das erfindungsgemäß hergestellte, wasserunlösliches organisches Lösungsmittel enthaltende Organopolysiloxanharz gegebenenfalls in einer 4. Stufe vom wasserunlöslichen, organischen Lösungsmittel befreit. Dies geschieht vorzugsweise durch Sprühtrocknung.

Die Sprühtrocknung wird dabei vorzugsweise unter Inertgas, wie etwa Stickstoff, durchgeführt. Die Eintrittstemperatur liegt je nach verwendetem wasserunlöslichen organischen Lösungsmittel vorzugsweise zwischen 60 bis 350°C und die Austrittstemperatur vorzugsweise zwischen 50 bis 200°C. Das wasserunlösliche organische Lösungsmittel kann dabei wieder rückgewonnen werden.

Nach einer bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat
in einer 1. Stufe
mit Wasser und 0,2 bis 50 mmol Säure, bezogen auf 1000 g der Reaktionsmasse der 1. Stufe vor der Destillation, vermischt, bei der Siedetemperatur der Reaktionsmasse und einem Druck zwischen 900 und 1100 hPa umgesetzt und entstandener Ethanol abdestilliert,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und einem wasserunlöslichen organischen Lösungsmittel, insbesondere Toluol oder Xylol, bei der Siedetemperatur der Reaktionsmasse und einem Druck zwischen 900 und 1100 hPa umgesetzt, wobei Wasser sowie Ethanol vollständig bzw. nahezu vollständig abdestilliert wird,
in einer 3. Stufe
die in der 2. Stufe erhaltene homogene Reaktionsmasse mit Säure neutralisiert, gegebenenfalls Wasser und Ethanol vollständig abdestilliert und das bei der Neutralisation entstandene, ausgefallene Salz abfiltriert sowie gegebenenfalls
in einer 4. Stufe
die in der 3. Stufe erhaltene Reaktionsmasse in Stickstoffatmosphäre sprühgetrocknet.

Nach einer besonders bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat
in einer 1. Stufe
mit Wasser und 100 bis 500 ppm HCl, bezogen auf das Gesamtgewicht der Reaktionsmasse der 1. Stufe vor der Destillation, vermischt, bei der Siedetemperatur der Reaktionsmasse und einem Druck zwischen 900 und 1100 hPa umgesetzt und ca. 70 Gewichtsprozent des entstandenen Ethanols, bezogen auf die Gesamtmenge des entstandenen Ethanols, abdestilliert,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und Toluol oder Xylol als wasserunlösliches organisches Lösungsmittel bei der Siedetemperatur der Reaktionsmasse und einem Druck zwischen 900 und 1100 hPa umgesetzt, wobei Wasser sowie Ethanol vollständig bzw. nahezu vollständig abdestilliert wird,
in einer 3. Stufe
die in der 2. Stufe erhaltene homogene Reaktionsmasse mit HCl neutralisiert, Wasser und gegebenenfalls Ethanol vollständig abdestilliert und das bei der Neutralisation entstandene, ausgefallene Salz abfiltriert sowie gegebenenfalls
in einer 4. Stufe
die in der 3. Stufe erhaltene Reaktionsmasse in Stickstoffatmosphäre sprühgetrocknet.

Falls bei dem erfindungsgemäßen Verfahren die 4. Stufe nicht durchgeführt wird, fällt das Organopolysiloxanharz in der Regel im Gemisch mit wasserunlöslichem organischen Lösungsmittel als sogenanntes Harzkonzentrat an.

Das erfindungsgemäße Organopolysiloxanharz hat ein durchschnittliches Molekulargewicht von vorzugsweise 500 bis 10000 g/mol und weist durchschnittlich keine oder höchstens bis zu 6 Molprozent Alkoxygruppen, bezogen auf tetrafunktionelle Si-Einheiten (SiO_{4/2}), und keine oder höchstens 0,5 Gewichtsprozent Hydroxygruppen, bezogen auf das Gesamtgewicht an Organopolysiloxanharz, auf. Das erfindungsgemäße Organopolysiloxanharz ist zumindest zum Teil, vorzugsweise jedoch ganz, in flüssigem Organopolysiloxan löslich.

Beispiele für die erfindungsgemäßen Organopolysiloxanharze sind [Me₃SiO_{1/2}]ₓ[SiO_{4/2}]_{y} mit Me gleich Methylrest und einem Verhältnis von x:y von 0,6 : 1 bis 1 : 1 sowie [Me₃SiO_{1/2}]ₓ[Me₂ViSiO_{1/2}]_{y}[SiO_{4/2}]_{z} mit Me gleich Methylrest, Vi gleich Vinylrest und einem Verhältnis von (x+y):z von 0,6 : 1 bis 1 : 1 und einem Verhältnis von x:y von 98:2 bis 60:40.

Das erfindungsgemäße Verfahren hat den Vorteil, daß es sehr einfach in der Durchführung ist, sehr gut reproduzierbar ist und hohe Raum-Zeit-Ausbeuten liefert. Das verwendete wasserunlösliche organische Lösungsmittel sowie der Alkohol können auf einfache Weise rückgewonnen werden. Ein weiterer Vorteil besteht darin, daß bei dem erfindungsgemäßen Verfahren keine flüssig/flüssig-Phasentrennung durchgeführt wird und dadurch keine Ausbeuteverluste auftreten.

Aufgrund der homogenen Reaktionsführung und der niedrigen Säurekonzentrationen entsteht ein Harz mit einem nur geringen Anteil niedermolekularer Harzfraktionen.

Nach dem erfindungsgemäßen Verfahren werden Organopolysiloxanharze mit einer großen Reinheit und keinen Alkoxy- und/oder Hydroxygruppen bzw. einem niedrigen Gehalt an Alkoxy- und/oder Hydroxygruppen erhalten, die eine hohe Lagerstabilität besitzen und sich ausgezeichnet zu Produkten mit einer hohen Lagerstabilität weiterverarbeiten lassen. Aus den erfindungsgemäßen Harzen können daher ausgezeichnet durch Sprühtrocknung Pulver hergestellt werden.

Das erfindungsgemäße Verfahren mit in der 4. Stufe durchgeführter Sprühtrocknung zur Herstellung von Organopolysiloxanpulver hat den Vorteil, daß das Harz bei der Sprühtrocknung nicht verändert wird und das erhaltene Pulver mit einer hohen Lösungskinetik anfällt. Die erfindungsgemäßen Organopolysiloxanharzpulver haben darüberhinaus den Vorteil, daß sie im wesentlichen frei von organischem Lösungsmittel anfallen und eine gute Lagerstabilität aufweisen.

Die erfindungsgemäßen Organopolysiloxanharzpulver haben eine durchschnittliche Partikelgröße von vorzugsweise 1 bis 500 »m. Die erfindungsgemäßen Organopolysiloxanharzpulver sind zumindest zum Teil, vorzugsweise jedoch ganz, in Organopolysiloxanen und gängigen organischen Lösungsmitteln löslich. In organischen Lösungsmitteln, wie Toluol, Aceton, Hexan und Tetrahydrofuran, sind die erfindungsgemäßen Organopolysiloxanharzpulver ausgezeichnet löslich, während sie in niedrigen Alkoholen, wie Methanol und Ethanol, nur zum Teil löslich sind.

Die erfindungsgemäßen Organopolysiloxanharze eignen sich für alle Anwendungen, für die auch bisher Organopolysiloxanharze eingesetzt werden konnten. So können die erfindungsgemäßen Organopolysiloxanharze bzw. -konzentrate und Organopolysiloxanharzpulver beispielsweise als Schaumstabilisatoren, als Zusatz zu Antischaummitteln, Tonern, Lack- und anderen Beschichtungssystemen, wie etwa Papierbeschichtungsmassen, verwendet werden. Sie können aber auch anstelle hydrophobierter hochdisperser Kieselsäure als Füllstoffe in Kunststoffen, insbesondere Siliconkautschuk, verwendet werden.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Beispiel 1

Zu 900 g Tetraethoxysilan mit einem 40 %igen SiO₂-Anteil (käuflich erhältlich unter der Bezeichnung TES 40 bei der Wacker-Chemie GmbH, München) und 365 g Hexamethyldisiloxan werden 210 g Wasser und 1,9 g 20 %ige Salzsäure gegeben und für eine Dauer von 2,5 Stunden bei einer Temperatur von 78°C unter Rückfluß erhitzt. Anschließend werden innerhalb von einer Stunde 480 g Destillat abgenommen. Das erhaltene Destillat enthält 10 % Wasser und 90 % Ethanol. Das homogene Reaktionsgemisch versetzt man dann mit 557 g Toluol und 4 g einer 25 %igen Lösung von NaOH in Wasser und destilliert 457 g flüchtige Bestandteile ab. Das erhaltene Destillat besteht zu 47 % aus Ethanol, zu 38 % aus Wasser und zu 15 % aus Toluol. Anschließend neutralisiert man das homogene Reaktionsgemisch mit 2 ml 20 %iger Salzsäure und destilliert 121 g flüchtige Bestandteile ab. Dieses Destillat enthält 3 % Ethanol, 0,1 % Wasser und 96,9 % Toluol. Das vollständig ausgefallene Natriumchlorid wird dann abfiltriert.

Man erhält 952 g (98 % der Theorie) einer neutralen Organopolysiloxanharzlösung in Toluol mit einem Anteil an Harz von 74,7 Gew.-% und einer Viskosität von 294 mm²/s.

Nach zweimonatiger Lagerung der Harzlösung bei Raumtemperatur ändert sich die Viskosität nicht.

Bezogen auf tetrafunktionelle Si-Einheiten (SiO_{4/2}) weist das Harz nach NMR-Messungen einen Restethoxygehalt von 5 Mol-% auf.

Verdünnt man das Harzkonzentrat mit Toluol auf einen Harzanteil von 50 %, besitzt die resultierende Lösung eine Viskosität von 3,8 mm²/s und einen OH-Gehalt von 0,24 %.

Das Gelpermeationschromatogramm zeigt 3 Molekulargewichtsfraktionen mit einem Anteil von 17,5 % einer niedermolekularen (Elutionsvolumen: 15,1 ml), 43,2 % einer mittleren (Elutionsvolumen: 13,9 ml) und 39,3 % einer höher molekularen Fraktion (Elutionsvolumen: 12,7 ml).

Aus dem Harzkonzentrat wurde durch Sprühtrocknung im Stickstoffstrom ein Harzpulver mit einer mittleren Teilchengröße von 20 »m erzeugt (Eintrittstemperatur: 160°C, Austrittstemperatur: 130°C). Dieses Harzpulver ist in gängigen organischen Lösungsmitteln, wie Toluol und Xylol, und in Siloxanen vollständig löslich.

Eine 50 %ige Lösung des Pulvers in Toluol besitzt eine Viskosität von 3,8 mm²/s und einen OH-Gehalt von 0,24 %. Das erfindungsgemäße Organopolysiloxanharz wurde durch den Trocknungsprozeß somit nicht verändert.

### Beispiel 2

Zu 900 g Tetraethoxysilan mit einem 40 %igen SiO₂-Anteil, 350 g Hexamethyldisiloxan und 55,4 g 1,3-Divinyltetramethyldisiloxan werden 210 g Wasser und 3,6 g 50 %ige Paratoluolsulfonsäure in Ethanol gegeben und für eine Dauer von 2,5 Stunden bei einer Temperatur von 78°C auf Rückfluß erhitzt. Anschließend werden innerhalb von einer Stunde 483 g Destillat abgenommen. Das erhaltene Destillat enthält 11 % Wasser und 89 % Ethanol.

Das homogene Reaktionsgemisch versetzt man dann mit 561 g Toluol und 6,4 g einer 40 %igen Lösung von Methylamin in Wasser und destilliert 643 g flüchtiger Bestandteile ab. Das erhaltene Destillat enthält 24 % Wasser, 36 % Ethanol und 40 % Toluol. Dann neutralisiert man das homogene Reaktionsgemisch mit einer 50 %igen Lösung von Paratoluolsulfonsäure in Ethanol und filtriert das vollständig ausgefallene Salz ab.

Man erhält 939 g (98 % der Theorie) einer neutralen Organopolysiloxanharzlösung in Toluol mit einem Anteil an Harz von 80,0 Gew.-% und einer Viskosität von 253 mm²/s.

Bezogen auf tetrafunktionelle Si-Einheiten (SiO_{4/2}) weist das Harz nach NMR-Messungen einen Restethoxygehalt von 4,2 Mol-% auf.

Verdünnt man das Harzkonzentrat mit Toluol auf einen Harzanteil von 50 %, besitzt die resultierende Lösung eine Viskosität von 3,0 mm²/s und einen OH-Gehalt von 0,20 %.

Das Harzkonzentrat läßt sich analog wie in Beispiel 1 beschrieben zu einem in Toluol und in Siloxanen vollständig löslichen Harzpulver sprühtrocknen.

### Beispiel 3

Zu 900 g Tetraethoxysilan mit einem 40 %igen SiO₂-Anteil, 350 g Hexamethyldisiloxan und 55,4 g 1,3-Divinyltetramethyldisiloxan werden 210 g Wasser und 1,9 g 20 %ige Salzsäure in Wasser gegeben und für eine Dauer von 2,5 Stunden bei einer Temperatur von 78°C auf Rückfluß erhitzt. Anschließend werden innerhalb von einer Stunde 483 g Destillat abgenommen. Das erhaltene Destillat enthält 11 % Wasser und 89 % Ethanol.

Das homogene Reaktionsgemisch versetzt man dann mit 561 g Toluol und 4 g einer 25 %igen Lösung von NaOH in Wasser und destilliert 549 g flüchtiger Bestandteile ab. Das erhaltene Destillat enthält 28 % Wasser, 42 % Ethanol und 30 % Toluol. Dann neutralisiert man das homogene Reaktionsgemisch mit 2,1 ml 20%iger Salzsäure in Wasser, destilliert 93 g flüchtiger Bestandteile ab und filtriert das vollständig ausgefallene Salz ab. Das erhaltene Destillat enthält 0,02 % Wasser, 0,4 % Ethanol und 99,58 % Toluol.

Man erhält 945 g (98 % der Theorie) einer neutralen Organopolysiloxanharzlösung in Toluol mit einem Festgehalt von 79,5 % und einer Viskosität von 228 mm²/s.

Bezogen auf tetrafunktionelle Si-Einheiten (SiO_{4/2}) weist das Harz nach NMR-Messungen einen Restethoxygehalt von 4,0 Mol-% auf.

Verdünnt man das Harzkonzentrat mit Toluol auf einen Harzanteil von 50 %, besitzt die resultierende Lösung eine Viskosität von 3,0 mm²/s und einen OH-Gehalt von 0,19 %.

Das Gelpermeationschromatogramm zeigt 3 Molekulargewichtsfraktionen mit einem Anteil von 20,1 % einer niedermolekularen (Elutionsvolumen: 15,1 ml), 44,8 % einer mittleren (Elutionsvolumen: 13,9 ml) und 35,1 % einer höhermolekularen (Elutionsvolumen: 12,7 ml) Fraktion.

Das Harzkonzentrat läßt sich analog wie in Beispiel 1 beschrieben zu einem in Toluol und in Siloxanen vollständig löslichen Harzpulver sprühtrocknen.

### Vergleichsbeispiel 1

Zu 900 g Tetraethoxysilan mit einem 40 %igen SiO₂-Anteil und 365 g Hexamethyldisiloxan werden 210 g Wasser und 1,9 g 20 %ige Salzsäure gegeben und für eine Dauer von 2,5 Stunden bei einer Temperatur von 78°C unter Rückfluß erhitzt. Anschließend versetzt man das homogene Reaktionsgemisch mit 4 g einer 25 %igen Lösung von NaOH in Wasser. Nach dem Abdestillieren von ca. 200 g flüchtiger Bestandteile nimmt die Viskosität des Reaktionsgemisches erheblich zu, Organopolysiloxanharz fällt aus und das Reaktionsgemisch wird heterogen.

### Vergleichsbeispiel 2

Zu 900 g Tetraethoxysilan mit einem 40 %igen SiO₂-Anteil und 365 g Hexamethyldisiloxan werden 210 g Wasser und 1,9 g 20 %ige Salzsäure gegeben und für eine Dauer von 2,5 Stunden auf Rückfluß erhitzt. Anschließend werden innerhalb von einer Stunde 480 g Destillat abgenommen.

Das homogene Reaktionsgemisch versetzt man dann mit 557 g Toluol und 4 g einer 25 %igen Lösung von NaOH in Wasser und erhitzt für eine Dauer von 2 Stunden unter Rückfluß. Anschließend neutralisiert man die homogene Reaktionsmischung mit 2 ml 20 %iger Salzsäure, destilliert dann 578 g flüchtige Bestandteile ab und befreit die Harzlösung von vollständig ausgefallenem Natriumchlorid durch Filtration.

Man erhält 957 g (98 % der Theorie) einer neutralen Organopolysiloxanharzlösung in Toluol mit einem Anteil an Harz von 74,3 Gew.-% und einer Viskosität von 148 mm²/s.

Verdünnt man das Harzkonzentrat mit Toluol auf einen Harzanteil von 50 %, besitzt die resultierende Lösung eine Viskosität von 3,67 mm²/s und einen OH-Gehalt von 0,78 %.

Das Gelpermeationschromatogramm zeigt nicht die drei charakteristischen Molekulargewichtsfraktionen aus Beispiel 1.

Jeweils 150 Teile eines trimethylsilylendständigen Polydimethylsiloxans mit einer Viskosität von 75 mm²/s werden mit 134,6 Teilen des Harzkonzentrates aus Vergleichsbeispiel 2 (Mischung A) bzw. 133,8 Teilen des Harzkonzentrates aus Beispiel 1 (Mischung B) vermischt. Die Mischungen werden anschließend bei 130°C und einem Druck von 5 hPa von organischem Lösungsmittel befreit (Produkt A, Produkt B). Anschließend wird die Viskosität sofort bzw. nach Lagerung bestimmt.

| | **Viskosität nach Herstellung** | **Viskosität nach 2 Tagen** | **Viskosität nach 18 Tagen** |
|---|---|---|---|
| **Produkt A** | 6820 mm²/s | 8789 mm²/s | - |
| **Produkt B** | 1358 mm²/s | - | 1357 mm²/s |

Das Beispiel zeigt, daß Produkt A eine deutlich höhere Viskosität und eine geringere Viskositätsstabilität als Produkt B aufweist.

### Vergleichsbeispiel 3

Zu 900 g Tetraethoxysilan mit einem 40 %igen SiO₂-Anteil, 300 g Hexamethyldisiloxan und 47 g 1,3-Divinyltetramethyldisiloxan werden 430 g Wasser und 66 g 20 %ige Salzsäure gegeben und für eine Dauer von 2,5 Stunden auf Rückfluß erhitzt. Das heterogene Reaktionsgemisch versetzt man dann mit 1000 g Toluol und 800 g Wasser und trennt die organische Phase von der wäßrigen Phase ab. Zu der organischen Phase gibt man dann 4 g einer 25 %igen Lösung von NaOH in Wasser und destilliert zur vollständigen Entfernung von Wasser und Ethanol bis zu einer Rührguttemperatur von 110°C flüchtige Bestandteile ab. Dann neutralisiert man das Reaktionsgemisch mit 2,1 ml 20 %iger Salzsäure und destilliert anschließend soviel flüchtige Bestandteile ab, daß ein Harzanteil von 80 % in Toluol resultiert. Die erhaltene Harzlösung wird dann von vollständig ausgefallenem Natriumchlorid durch Filtration befreit.

Die Harzlösung besitzt eine Viskosität von 302 mm²/s. Bezogen auf tetrafunktionelle Si-Einheiten (SiO_{4/2}) weist das Harz nach NMR-Messungen einen Restethoxygehalt von 4 Mol-% auf.

Verdünnt man das Harzkonzentrat mit Toluol auf einen Harzanteil von 50 %, besitzt die resultierende Lösung eine Viskosität von 3,14 mm²/s und einen OH-Gehalt von 0,25 %.

Das Gelpermeationschromatogramm zeigt 3 Molekulargewichtsfraktionen mit einem Anteil von 36 % einer niedermolekularen (Elutionsvolumen: 15,1 ml), 38,8 % einer mittleren (Elutionsvolumen: 13,9 ml) und 25,2 % einer höhermolekularen (Elutionsvolumen: 12,7 ml) Fraktion.

## Patentansprüche

1. Verfahren zur Herstellung von Organopolysiloxanharz, dadurch gekennzeichnet, daß
in einer 1. Stufe
mindestens ein Silan der Formel
R₃SiOR¹ (I)
und/oder dessen Hydrolysat R₃SiOSiR₃, wobei
R gleich oder verschieden sein kann und einen einwertigen organischen Rest bedeutet und
R¹ einen Alkylrest bedeutet,
und mindestens ein Silan der Formel
Si(OR²)₄ (II)
und/oder dessen Teilhydrolysat, wobei
R² gleich oder verschieden sein kann und Alkylrest bedeutet,
sowie gegebenenfalls Organosiliciumverbindung, ausgewählt aus der Gruppe bestehend aus Silanen der Formel
R³ₐSi(OR⁴)₄₋ₐ (III)
und/oder deren Teilhydrolysate, wobei
a 1 oder 2 ist,
R³ gleich oder verschieden sein kann und einen einwertigen organischen Rest bedeutet und
R⁴ gleich oder verschieden sein kann und Alkylrest bedeutet, und
Organo(poly)siloxane der Formel
(R⁵₂SiO)_{b} (IV),
wobei
R⁵ gleich oder verschieden sein kann und einen einwertigen organischen Rest bedeutet und
b eine ganze Zahl im Wert von 3 bis 8 ist,
sowie deren Gemische,
mit Wasser in Gegenwart von Säure umgesetzt wird, wobei der entstandene Alkohol zumindest zum Teil abdestilliert wird,
in einer 2. Stufe
die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol destillativ entfernt werden,
in einer 3. Stufe
die in der 2. Stufe erhaltene homogene Reaktionsmasse mit Säure neutralisiert wird, gegebenenfalls noch vorhandenes Wasser und Alkohol abdestilliert wird und das aus der Neutralisation entstandene, ausgefallene Salz entfernt wird sowie
gegebenenfalls in einer 4. Stufe
die in der 3. Stufe erhaltene homogene Reaktionsmasse von wasserunlöslichem organischen Lösungsmittel befreit wird.

2. Verfahren nach Anspruch 1, dadurch gekennzeichnet, daß in der 1. Stufe Säure in Mengen von 0,2 bis 50 mmol, bezogen auf 1000 g der Reaktionsmasse der 1. Stufe vor der Destillation, eingesetzt wird.

3. Verfahren nach Anspruch 1 oder 2, dadurch gekennzeichnet, daß in der 1. Stufe HCl in einer Menge von 100 bis 500 ppm, bezogen auf das Gesamtgewicht der Reaktionsmasse der 1. Stufe vor der Destillation, eingesetzt wird.

4. Verfahren nach einem oder mehreren der Ansprüche 1 bis 3, dadurch gekennzeichnet, daß in der 2. Stufe als Base solche, ausgewählt aus der Gruppe bestehend aus Natriumhydroxid, Kaliumhydroxid, Methylamin, Ethylamin, Diethylamin und Benzyltrimethylammoniumhydroxid, eingesetzt werden.

5. Verfahren nach einem oder mehreren der Ansprüche 1 bis 4, dadurch gekennzeichnet, daß als wasserunlösliches organisches Lösungsmittel Toluol oder o,m,p-Xylol eingesetzt wird.

6. Verfahren nach einem oder mehreren der Ansprüche 1 bis 5, dadurch gekennzeichnet, daß Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat
in einer 1. Stufe
mit Wasser und 0,2 bis 50 mmol Säure, bezogen auf 1000 g der Reaktionsmasse der 1. Stufe vor der Destillation, vermischt wird, bei der Siedetemperatur der Reaktionsmasse und einem Druck zwischen 900 und 1100 hPa umgesetzt wird und entstandener Ethanol abdestilliert wird,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und einem wasserunlöslichen organischen Lösungsmittel bei der Siedetemperatur der Reaktionsmasse und einem Druck zwischen 900 und 1100 hPa umgesetzt wird, wobei Wasser sowie Ethanol vollständig bzw. nahezu vollständig abdestilliert wird,
in einer 3. Stufe
die in der 2. Stufe erhaltene homogene Reaktionsmasse mit Säure neutralisiert wird, gegebenenfalls Wasser und Ethanol vollständig abdestilliert wird und das bei der Neutralisation entstandene, ausgefallene Salz abfiltriert wird sowie gegebenenfalls
in einer 4. Stufe
die in der 3. Stufe erhaltene Reaktionsmasse in Stickstoffatmosphäre sprühgetrocknet wird.

7. Verfahren nach einem oder mehreren der Ansprüche 1 bis 6, dadurch gekennzeichnet, daß Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat
in einer 1. Stufe
mit Wasser und 100 bis 500 ppm HCl, bezogen auf das Gesamtgewicht der Reaktionsmasse der 1. Stufe vor der Destillation, vermischt wird, bei der Siedetemperatur der Reaktionsmasse und einem Druck zwischen 900 und 1100 hPa umgesetzt wird und ca. 70 Gewichtsprozent des entstandenen Ethanols, bezogen auf die Gesamtmenge des entstandenen Ethanols, abdestilliert wird,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und Toluol oder Xylol als wasserunlösliches organisches Lösungsmittel bei der Siedetemperatur der Reaktionsmasse und einem Druck zwischen 900 und 1100 hPa umgesetzt wird, wobei Wasser sowie Ethanol vollständig bzw. nahezu vollständig abdestilliert wird,
in einer 3. Stufe
die in der 2. Stufe erhaltene homogene Reaktionsmasse mit HCl neutralisiert wird, Wasser und gegebenenfalls Ethanol vollständig abdestilliert wird und das bei der Neutralisation entstandene, ausgefallene Salz abfiltriert wird sowie gegebenenfalls
in einer 4. Stufe
die in der 3. Stufe erhaltene Reaktionsmasse in Stickstoffatmosphäre sprühgetrocknet wird.

## Claims

1. Process for the preparation of organopolysiloxane resin, characterized in that
in a 1st stage
at least one silane of the formula
R₃SiOR¹ (I)
and/or hydrolysate thereof R₃SiOSiR₃, in which
R can be identical or different and is a monovalent organic radical and
R¹ is an alkyl radical,
and at least one silane of the formula
Si(OR²)₄ (II)
and/or partial hydrolysate thereof, in which
R² can be identical or different and is an alkyl radical,
and if appropriate an organosilicon compound chosen from the group consisting of silanes of the formula
R³ₐSi(OR⁴)₄₋ₐ (III)
and/or partial hydrolysates thereof, in which
a is 1 or 2,
R³ can be identical or different and is a monovalent organic radical and
R⁴ can be identical or different and is an alkyl radical, and
organo(poly)siloxanes of the formula
(R⁵₂SiO)_{b} (IV)
in which
R⁵ can be identical or different and is a monovalent organic radical and
b is an integer having a value from 3 to 8,
and mixtures thereof,
is [sic] reacted with water in the presence of acid, the alcohol formed being at least partly distilled off, in a 2nd stage
the homogeneous reaction mass obtained in the 1st stage is reacted in the presence of a base and at least an amount of water-insoluble organic solvent which is sufficient to obtain a homogeneous reaction mass, and the water and alcohol are removed by distillation,
in a 3rd stage
the homogeneous reaction mass obtained in the 2nd stage is neutralized with an acid, if appropriate water and alcohol still present is [sic] distilled off and the salt formed from the neutralization, which has precipitated out, is removed, and
if appropriate, in a 4th stage
the homogeneous reaction mass obtained in the 3rd stage is freed from the water-insoluble organic solvent.

2. Process according to Claim 1, characterized in that, in the 1st stage, the acid is employed in an amount of 0.2 to 50 mmol, based on 1000 g of the reaction mass of the 1st stage before the distillation.

3. Process according to Claim 1 or 2, characterized in that, in the 1st stage, HCl is employed in an amount of 100 to 500 ppm, based on the total weight of the reaction mass of the 1st stage before the distillation.

4. Process according to one or more of Claims 1 to 3, characterized in that, in the 2nd stage, the base employed is one chosen from the group consisting of sodium hydroxide, potassium hydroxide, methylamine, ethylamine, diethylamine and benzyltrimethylammonium hydroxide.

5. Process according to one or more of Claims 1 to 4, characterized in that the water-insoluble organic solvent employed is toluene or o-, m- or p-xylene.

6. Process according to one or more of Claims 1 to 5, characterized in that hexamethyldisiloxane and/or trimethylethoxysilane, if appropriate mixed with 1,3-divinyltetramethyldisiloxane and/or vinyldimethylethoxysilane and tetraethoxysilane and/or a partial hydrolysate thereof
in a 1st stage
is [sic] mixed with water and 0.2 to 50 mmol of acid, based on 1000 g of the reaction mass of the 1st stage before the distillation, the components is [sic] reacted at the boiling temperature of the reaction mass and under a pressure of between 900 and 1100 hPa, and the ethanol formed is distilled off,
in a 2nd stage
the homogeneous reaction mass obtained in the 1st stage is reacted in the presence of a base chosen from the group consisting of sodium hydroxide, potassium hydroxide and methylamine and a water-insoluble organic solvent, at the boiling temperature of the reaction mass and under a pressure of between 900 and 1100 hPa, water and ethanol being distilled off completely or virtually completely,
in a 3rd stage
the homogeneous reaction mass obtained in the 2nd stage is neutralized with an acid, if appropriate water and ethanol is [sic] distilled off completely and the salt formed during the neutralization, which has precipitated out, is filtered off, and, if appropriate,
in a 4th stage
the reaction mass obtained in the 3rd stage is spray-dried under a nitrogen atmosphere.

7. Process according to one or more of Claims 1 to 6, characterized in that hexamethyldisiloxane and/or trimethylethoxysilane, if appropriate mixed with 1,3-divinyltetramethyldisiloxane and/or vinyldimethylethoxysilane and tetraethoxysilane and/or a partial hydrolysate thereof,
in a 1st stage
is [sic] mixed with water and 100 to 500 ppm of HCl, based on the total weight of the reaction mass of the 1st stage before the distillation, the components is [sic] reacted at the boiling temperature of the reaction mass and under a pressure of between 900 and 1100 hPa, and about 70 per cent by weight of the ethanol formed, based on the total amount of ethanol formed, is distilled off,
in a 2nd stage
the homogeneous reaction mass obtained in the 1st stage is reacted in the presence of a base chosen from the group consisting of sodium hydroxide, potassium hydroxide and methylamine and toluene or xylene as a water-in-soluble organic solvent at the boiling temperature of the reaction mass and under a pressure of between 900 and 1100 hPa, water and ethanol being distilled off completely or virtually completely,
in a 3rd stage
the homogeneous reaction mass obtained in the 2nd stage is neutralized with HCl, the water and if appropriate ethanol is [sic] distilled off completely and the salt formed during the neutralization, which has precipitated out, is filtered off and, if appropriate,
in a 4th stage
the reaction mass obtained in the 3rd stage is spray-dried in a nitrogen atmosphere.

## Revendications

1. Procédé de fabrication de résine organopolysiloxanique, caractérisé en ce que :
dans une première étape,
au moins un silane de formule :
R₃SiOR¹ (I)
et/ou son hydrolysat R₃SiOSiR₃,
où :
R peut être identique ou différent et représente un radical organique monovalent, et
R¹ représente un radical alcoyle, et au moins un silane de formule :
Si(OR²)₄ (II)
et/ou son hydrolysat partiel,
où :
R² peut être identique ou différent et représente un radical alcoyle,
ainsi que, facultativement, un composé organosilicié, choisi parmi le groupe constitué des silanes de formule :
R³ₐSi(OR⁴)₄₋ₐ (III)
et/ou leur hydrolysat partiel,
où :
a est 1 ou 2;
R³ peut être identique ou différent et représente un radical organique monovalent, et
R⁴ peut être identique ou différent et représente un radical alcoyle, et
les organo(poly)siloxanes de formule :
(R⁵₂SiO)_{b} (IV)
où :
R⁵ peut être identique ou différent et représente un radical organique monovalent, et
b est un nombre entier de valeur 3 à 8,
ainsi que leurs mélanges
sont mis à réagir avec de l'eau en présence d'acide, où l'alcool formé est au moins partiellement séparé par distillation;
dans une deuxième étape,
la masse réactionnelle homogène obtenue à l'étape 1 est mise à réagir en présence d'une base ainsi que d'au moins un solvant organique imsoluble dans l'eau en une quantité qui est suffisante pour obtenir une masse réactionnelle homogène et l'eau ainsi que l'alcool sont séparés par distillation;
dans une troisième étape,
la masse réactionnelle homogène obtenue à l'étape 2 est neutralisée par un acide, l'eau et l'alcool facultativement encore présents sont séparés par distillation et le sel précipité, formé par la neutralisation est séparé, ainsi que facultativement,
dans une quatrième étape,
la masse réactionnelle homogène obtenue à l'étape 3 est libérée du solvant organique insoluble dans l'eau.

2. Procédé suivant la revendication 1, caractérisé en ce que l'acide de la première étape est introduit en des quantités de 0,2 à 50 mmoles, sur base de 1000 g de masse réactionnelle de la première étape avant la distillation.

3. Procédé suivant la revendication 1 ou 2, caractérisé en ce que l'HCl de la première étape est introduit en des quantités de 100 à 500 ppm, sur base du poids total de la masse réactionnelle de la première étape avant la distillation.

4. Procédé suivant l'une ou plusieurs des revendications 1 à 3, caractérisé en ce que, dans la deuxième étape, on utilise comme base, l'une choisie parmi le groupe consistant en hydroxyde de sodium, hydroxyde de potassium, méthylamine, éthylamine, diéthylamine et hydroxyde de benzyltriméthylammonium.

5. Procédé suivant l'une ou plusieurs des revendications 1 à 4, caractérisé en ce que l'on utilise comme solvant organique insoluble dans l'eau, le toluène ou l'o-, m-, p-xylène.

6. Procédé suivant l'une ou plusieurs des revendications 1 à 5, caractérisé en ce que l'hexaméthyldisiloxane et/ou le triméthyléthoxysilane, facultativement en mélange avec le 1,3-divinyltétraméthyldisiloxane et/ou le vinyldiméthyléthoxysilane et le tétraéthoxysilane et/ou leur hydrolysat partiel,
dans une première étape,
sont mélangés avec de l'eau et de 0,2 à 50 mmoles d'acide, sur base de 1000 g de masse réactionnelle de la première étape avant la distillation, sont mis à réagir à la température d'ébullition de la masse réactionnelle et à une pression située entre 900 et 1100 hPa et l'éthanol formé est distillé;
dans une deuxième étape,
la masse réactionnelle homogène obtenue à la première étape est mise à réagir en présence d'une base choisie parmi le groupe consistant en hydroxyde de sodium, hydroxyde de potassium et méthylamine, et d'un solvant organique insoluble dans l'eau, à la température d'ébullition de la masse réactionnelle et à une pression située entre 900 et 1100 hPa, où l'eau ainsi que l'éthanol sont complètement ou sensiblement complètement distillés; dans une troisième étape,
la masse réactionnelle homogène obtenue à la deuxième étape est neutralisée avec un acide, l'eau et l'éthanol facultatifs sont complètement distillés et le sel précipité, formé par la neutralisation est filtré, ainsi que facultativement,
dans une quatrième étape,
la masse réactionnelle obtenue à la troisième étape est séchée par pulvérsation sous atmosphère d'azote.

7. Procédé suivant l'une ou plusieurs des revendications 1 à 6, caractérisé en ce que l'hexaméthyldisiloxane et/ou le triméthyléthoxysilane, facultativement en mélange avec le 1,3-divinyltétraméthyldisiloxane et/ou le vinyldiméthyléthoxysilane et le tétraéthoxysilane et/ou leur hydrolysat partiel;
dans une première étape,
sont mélangés avec de l'eau et de 100 à 500 ppm d'HCl, sur base du Poids total de la masse réactionnelle de la première étape avant la distillation, sont mis à réagir à la température d'ébullition de la masse réactionnelle et à une pression située entre 900 et 1100 hPa et environ 70% en poids de l'éthanol formé sur base de la quantité totale d'éthanol formé sont distillés;
dans une deuxième étape,
la masse réactionnelle homogène obtenue à la première étape est mise à réagir en présence d'une base choisie parmi le groupe consistant en hydroxyde de sodium, hydroxyde de potassium et méthylamine, et de toluène ou de xylène comme solvant organique insoluble dans l'eau, à la température d'ébullition de la masse réactionnelle et à une pression située entre 900 et 1100 hPa, où l'eau ainsi que l'éthanol sont complètement ou sensiblement complètement distillés;
dans une troisième étape,
la masse réactionnelle homogène obtenue à la deuxième étape est neutralisée avec de l'HCl, l'eau et l'éthanol facultatif sont complètement distillés et le sel précipité, formé par la neutralisation est filtré, ainsi que facultativement;
dans une quatrième étape,
la masse réactionnelle obtenue à la troisième étape est séchée par pulvérisation sous atmosphère d'azote.
